# EUROPEAN PATENT SPECIFICATION

(11) **EP 3 842 989 B1**
(45) Date of publication and mention of the grant of the patent: **28.06.2023**
(21) Application number: 19879013.1
(22) Date of filing: 19.08.2019
(51) Int. Cl.: G06K 7/14

(54) **METHOD AND ELECTRONIC DEVICE FOR READING BARCODE**
VERFAHREN UND ELEKTRONISCHE VORRICHTUNG ZUM LESEN VON BARCODES
PROCÉDÉ ET DISPOSITIF ÉLECTRONIQUE PERMETTANT DE LIRE UN CODE-BARRES

(30) Priority: 31.10.2018 KR 20180132553
(43) Date of publication of application: 30.06.2021
(73) Proprietor: Samsung Electronics Co., Ltd., Suwon-si, Gyeonggi-do 16677 (KR)
(72) Inventor: USS, Mykhailo, Suwon-si, Gyeonggi-do 16677 (KR); KIS, Gennadiy, Suwon-si, Gyeonggi-do 16677 (KR); LOVEIKIN, Yuriy, Suwon-si, Gyeonggi-do 16677 (KR); HRINYK, Yurii, Suwon-si, Gyeonggi-do 16677 (KR); SHIN, Daekyu, Suwon-si, Gyeonggi-do 16677 (KR)
(74) Representative: Gulde & Partner
(86) International application number: PCT/KR2019/010469
(87) International publication number: WO 2020/091206

(56) References cited:
- EP-A1- 3 296 927
- EP-A2- 0 436 072
- KR-A- 20110 134 362
- US-A1- 2005 017 076
- US-A1- 2006 113 390
- US-A1- 2009 001 165
- YANG HUA ET AL: "Automatic barcode recognition method based on adaptive edge detection and a mapping model", JOURNAL OF ELECTRONIC IMAGING, S P I E - INTERNATIONAL SOCIETY FOR OPTICAL ENGINEERING, US, vol. 25, no. 5, 1 September 2016 (2016-09-01), page 53019, XP060075279, ISSN: 1017-9909, DOI: 10.1117/1.JEI.25.5.053019 [retrieved on 2016-09-29]
- JAYANTHA P. LIYANAGE: "Efficient Decoding of Blurred , Pitched , and Scratched Barcode Images", SEMANTIC SCHOLAR, 2008, XP55704432, Retrieved from the Internet: URL:https://www.semanticscholar.org/paper/ Efficient-Decoding-of-Blurred-%2C-Pitched- %2C-and-Liyanage/7eed214651966d05clceee549 6284f3d132561cl [retrieved on 2019-11-14]

## Description

### TECHNICAL FIELD

The present disclosure relates to an electronic device that reads a barcode and an operating method of the electronic device.

### BACKGROUND ART

A barcode is a symbol made by encoding alphabetical, numerical, or special symbols based on a combination of bars and spaces to facilitate optical reading thereof. According to a rule defined by a barcode language, bars and spaces representing characters or numbers are arranged to constitute the barcode.

The barcode, which is a label representing information of a product, has been widely used so far because it stably contains the information and is rapidly readable. Recently, various services have been provided through barcodes attached to products or advertisements to allow a consumer to easily obtain information related to the products. The consumer may obtain the information related to a product by easily reading the barcode from a captured-barcode image obtained by capturing an image of the barcode by using a portable electronic device, without a need to separately include a barcode scanner. In the published article YANG HUAET AL: "Automatic barcode recognition method based on adaptive edge detection and a mapping model"; Author: YANG HUA ET AL, JOURNAL OF ELECTRONIC IMAGING, SP 1E- INTERNATIONAL SOCIETY FOR OPTICAL ENGINEERING, US, vol. 25, no. 5, 1 September 2016 (2016-09-01), page 53019, XP060075279, ISSN: 1017-9909, DOI: 10.1117/1.JEI.25.5.053019 an adaptive edge detection algorithm is disclosed in which a barcode pattern is determined in an image. Then, scan lines are constructed to recognize the barcode and edge positions of the barcode are accurately determined.

However, when distortion occurs for various reasons such as a surrounding environment, camera capabilities, etc., at the time of capturing the image, barcode reading performance using the captured-barcode image may be degraded. Therefore, there is a need for a method capable of improving barcode reading performance by considering distortion existing in the image.

### DESCRIPTION OF EMBODIMENTS

### SOLUTION TO PROBLEM

To solve the foregoing problem, provided are an electronic device according to claim 7, that reads a barcode from a captured-barcode image obtained by capturing an image of the barcode, and an operating method of the electronic device according to claim 1.

Also provided is a computer program product according to claim 13. Additional aspects will be set forth in part in the description which follows and, in part, will be apparent from the description, or may be learned by practice of the presented embodiments.

### BRIEF DESCRIPTION OF DRAWINGS

FIG. 1 illustrates an example of capturing an image of a barcode in an electronic device, according to an embodiment;
FIG. 2 illustrates an example of lines that cover a part of a barcode, according to an embodiment;
FIG. 3 illustrates an example of distortion existing in a captured-barcode image, according to an embodiment;
FIGS. 4 through 5 are block diagrams for describing an internal structure of an electronic device, according to an embodiment;
FIG. 6 is a flowchart illustrating a method of reading a barcode, according to an embodiment;
FIG. 7 is a flowchart illustrating a method of reading a barcode from an image, according to an embodiment; and
FIG. 8 illustrates an example of utilizing a method of reading a barcode, according to an embodiment.

### MODE OF DISCLOSURE

According to the invention, a method, performed by an electronic device, of reading a barcode is defined according to claim 1.

According to another aspect of the invention, an electronic device for reading a barcode is defined according to claim 7.

According to a third aspect of the invention, there is provided a computer-readable recording medium according to claim 13.

Hereinafter, embodiments of the present disclosure will be described in detail with reference to the attached drawings to allow those of ordinary skill in the art to easily carry out the embodiments of the present disclosure. However, the present disclosure may be implemented in various forms, and are not limited to the embodiments of the present disclosure described herein. To clearly describe the present disclosure, parts that are not associated with the description have been omitted from the drawings, and throughout the specification, identical reference numerals refer to identical parts.

In the description of the embodiments of the present disclosure, when a part is "connected" to another part, the part is not only "directly connected" to another part but also "electrically connected" to another part with another device intervening in them. When it is assumed that a certain part includes a certain component, the term "including" means that a corresponding component may further include other components unless a specific meaning opposed to the corresponding component is written.

Hereinafter, embodiments of the present disclosure will be described with reference to the accompanying drawings.

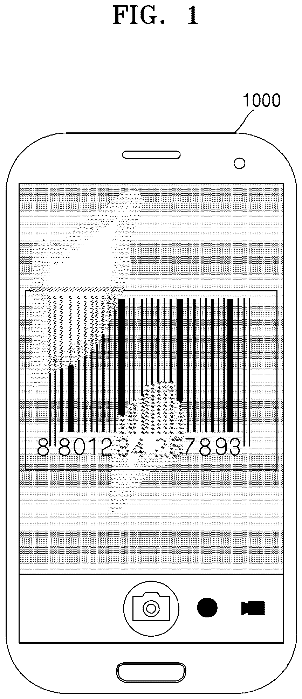

FIG. 1 illustrates an example of capturing an image of a barcode in an electronic device, according to an embodiment.

Referring to FIG. 1, an electronic device 1000 may capture an image of a barcode attached to or provided on a surface of an object of various kinds, such as a product, a flyer, a webpage, etc. The electronic device 1000 reads a barcode by analyzing a captured-barcode image. For example, a character or a number corresponding to a symbol of the barcode may be output as a result of reading the barcode. According to an embodiment, a user may photograph the barcode using the electronic device 1000 including a camera to read the barcode, without a need for a separate barcode scanner for reading the barcode.

However, the barcode included in an image captured using the camera may include distortion of various types occurring for various reasons such as an exterior lighting at the time of capturing the image, camera capabilities and state, an error occurring during capturing of the image, etc. For example, an image captured during movement of the electronic device 1000, an image captured during movement of a product having attached thereto a barcode, an image captured in a dark lighting environment, etc., may include distortion that makes it difficult for the electronic device 1000 to accurately read the barcode.

When distortion exists in the captured-barcode image, the performance of the electronic device 1000 to read the barcode from the image may be degraded. The electronic device 1000 according to an embodiment may read the barcode from the image with high performance by reading the barcode based on various types of distortion existing in the image. For example, the electronic device 1000 may identify a region where the barcode is provided, by drawing a plurality of lines for the barcode, and read the barcode from the image by reading the barcode using a region having a low distortion level.

The electronic device 1000 determines the plurality of lines that cover a part of the barcode in the image, and determine a distortion level of the barcode for each line. The distortion level of the barcode for each line is determined, for example, based on a level of distortion existing in a region of a specific range adjacent to each line, for the part of the barcode.

The plurality of lines that cover a part of the barcode according to an embodiment may be determined to be lines passing through the barcode. For example, the line may be determined to be a line that covers a plurality of bars of the barcode including bars located at opposite ends.

A level at which the barcode is distorted in the image according to an embodiment may mean a level of distortion that makes it difficult for the electronic device 1000 to accurately read the barcode from the image. For example, the distortion level of the barcode may be a value indicating a level at which a boundary between a bar and a space of the barcode is not clear, a level at which the barcode is deformed from its original form, etc., for various reasons of distortion.

The electronic device 1000 determines at least one line for reading the barcode based on the distortion level of the barcode for each line, and read the barcode by using the determined at least one line. For example, the electronic device 1000 may read the barcode by obtaining at least one parameter indicating characteristics of the barcode from an image region adjacent to the at least one line determined to read the barcode. The obtaining of the parameter may be performed in the same region as a region adjacent to each line used to obtain the distortion level of the barcode.

The parameter indicating the characteristics of the barcode may include, as a value for reading the barcode, for example, values of various types indicating the characteristics of the barcode, such as the number of bars and spaces of the barcode, widths of a bar and a space of the barcode, etc. The electronic device 1000 according to an embodiment may read the barcode by identifying a symbol included in the barcode by using the parameter indicating the characteristics of the barcode.

The parameter indicating the characteristics of the barcode may include an intensity and a size of a bar and a space, a blurring kernel of the image, a position of a number, etc., which are available for performing template-based barcode reading. According to an embodiment, template-based barcode reading may be performed based on the parameter indicating the characteristics of the barcode. The parameter indicating the characteristics of the barcode may include values of various types for reading the barcode, without being limited to the foregoing example.

The electronic device 1000 according to an embodiment may determine a weight value for at least one line, based on a distortion level of the barcode for each line. For example, the electronic device 1000 may determine at least one line for reading the barcode and determine the parameter indicating the characteristics of the barcode and the weight value for each line determined. The weight value may be determined to be inversely proportional to the distortion level of the barcode for each line. The electronic device 1000 may read the barcode based on the distortion level for each line by applying the determined weight value to the parameter.

The barcode that may be read according to an embodiment, which is a linear barcode, may include various types of a one-dimensional (1D) barcode such as EAN8, EAN13, UPC-A, UPC-E, Code 11, Code39, Code93, Code128, automatic dependent surveillance - broadcast (ADS-B), etc. However, without being limited to the foregoing example, the barcode that may be read according to an embodiment may include various types of barcodes that may be read using a line passing through at least one barcode.

The electronic device 1000 according to an embodiment may be a device capable of reading the barcode from the captured-barcode image. For example, the electronic device 1000 may be implemented using various devices such as a smart television (TV), a set-top box, a cellular phone, a tablet personal computer (PC), a digital camera, a laptop computer, a desktop, an electronic(e)-book terminal, a digital broadcasting terminal, a PDA, a PMP, a navigator, an MP3 player, a wearable device, and so forth. The electronic device 1000 according to an embodiment may be implemented using various types of electronic devices capable of reading the barcode by analyzing the captured-barcode image, without being limited to the foregoing example.

The electronic device 1000 according to an embodiment may obtain the image by capturing the image of the barcode using the camera included in the electronic device 1000. The electronic device 1000 may receive the captured-barcode image from an external device (not shown) or load the captured-barcode image, stored in a memory of the electronic device 1000, thereby obtaining the captured-barcode image. Without being limited to the above example, the electronic device 1000 may obtain the captured-barcode image in various manners.

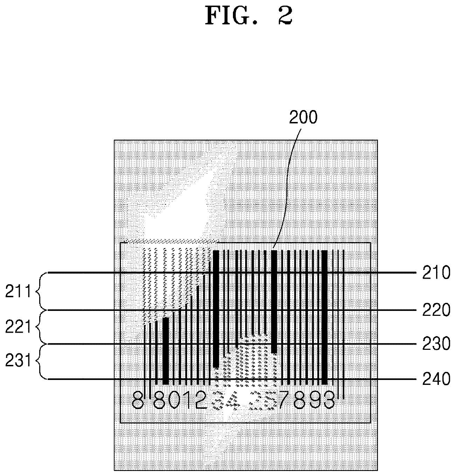

FIG. 2 illustrates an example of lines that cover a part of a barcode, according to an embodiment.

Referring to FIG. 2, in a captured-barcode image, a region 200 where a barcode is provided may be detected, and a plurality of lines 210, 220, 230, and 240 passing through the barcode according to an embodiment may be determined in the region 200 where the barcode is provided.

The plurality of lines covering a part of the barcode may be determined to be a plurality of lines covering opposite ends of the barcode in various directions. Without being limited thereto, the line may be determined to be a line in various directions, which covers the part of the barcode. According to an embodiment, the line may be determined to be a straight line, but without being limited thereto, and when the barcode of the image is provided as a curved line due to bending of a surface on which the barcode is printed, the line may be determined to be a curved line.

The electronic device 1000 determines at least one line based on a distortion level of the barcode in an image region adjacent to each of at least one line 210, 220, 230, or 240, and read the barcode based on the determined line.

The image region adjacent to the line according to an embodiment may be determined to be a region between the line and another line adjacent to the line. For example, a region adjacent to the first line 210 may be determined to be a first region 211 between the first line 210 and the second line 220. Likewise, regions adjacent to the second line 220 and the third line 230 may be determined to be a second region 221 and a third region 231. In another example, a region adjacent to a line may be determined to be a region in a range of n pixels upward, downward, or upward and downward from each line. The region adjacent to the line according to an embodiment may be determined in various manners, without being limited to the foregoing example.

Regions adjacent to the first line 210, the second line 220, the third line 230, and the fourth line 240 may include distortion due to lighting of a different level. The regions adjacent to the first line 210, the second line 220, the third line 230, and the fourth line 240 may include distortion of various types as well as lighting-based distortion.

A distortion level for each line may indicate the distortion level of the barcode included in the region adjacent to each line. The electronic device 1000 determines a distortion level for each line, and determine at least one line to be used for reading the barcode, based on the distortion level. For example, the electronic device 1000 may read the barcode by using the second line 220 including the lowest lighting-based distortion level among the first line 210, the second line 220, the third line 230, and the fourth line 240.

Thus, the electronic device 1000 according to an embodiment may read the barcode from the image with higher performance by reading the barcode by using at least one line having a lower distortion level.

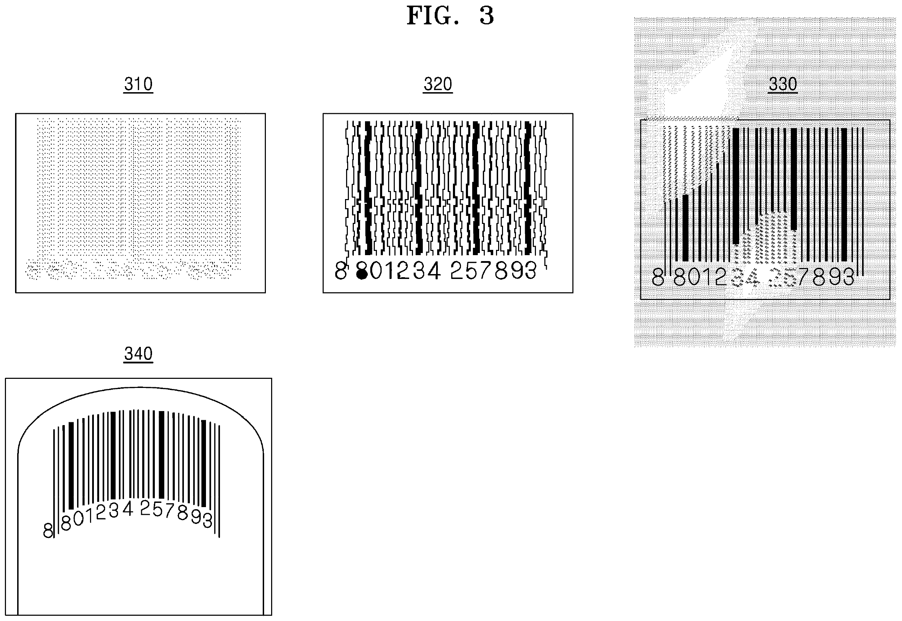

FIG. 3 illustrates an example of distortion existing in a captured-barcode image, according to an embodiment.

310 of FIG. 3 indicates an example of an image including blurring distortion. When blurring distortion occurs, a bar and a space constituting the barcode in the image are difficult to identify, such that the electronic device 1000 may fail to accurately read the barcode.

320 of FIG. 3 indicates an example of an image including distortion due to a low image resolution. When the resolution of a captured image is too low to read the barcode or a size of a captured-barcode region in the image is too small to read the barcode, it may be difficult for the electronic device 1000 to accurately obtain information indicating characteristics of the barcode in reading the barcode from the image.

330 of FIG. 3 indicates an example of an image including distortion due to lighting. When the image is captured under biased application of the lighting to a part of the barcode, it may be difficult for the electronic device 1000 to accurately obtain information indicating characteristics of the barcode in reading the barcode from the image.

340 of FIG. 3 indicates an example of an image including distortion due to a curved surface having attached thereto the barcode. When the surface to which the barcode is attached is curved, as the original form of the barcode is provided deformed in the captured-barcode image, it may be difficult for the electronic device 1000 to accurately obtain the information indicating the characteristics of the barcode in reading the barcode from the image.

In addition to the examples illustrated in FIG. 3, distortion may exist in the captured-barcode image due to various types of noise. For example, artifacts generated in image processing may exist in the captured-barcode image.

The electronic device 1000 determines the plurality of lines that cover a part of the barcode in the barcode image, and determine at least one line for reading the barcode based on a level of distortion existing in a region adjacent to each line.

For example, the electronic device 1000 may determine a distortion parameter indicating a distortion level for each line. The electronic device 1000 may determine, for each line, at least one of a parameter for blurring distortion, a parameter for resolution distortion, a parameter for lighting distortion, or a parameter for distortion caused by a curved surface. The electronic device 1000 may determine a distortion level of the barcode in a region adjacent to each line, based on the determined at least one distortion parameter. For example, a value indicating a distortion level of the barcode in a region adjacent to a line may be determined based on at least one distortion parameter. The electronic device 1000 determines at least one line for reading the barcode based on the distortion level for each line, and read the barcode based on the determined at least one line.

For example, the electronic device 1000 may read the barcode by obtaining a parameter indicating characteristics of the barcode from an image region of the barcode, which is adjacent to the line determined to read the barcode.

According to an embodiment, distortion existing in the captured-barcode image may include various types of distortion without being limited to the foregoing distortion.

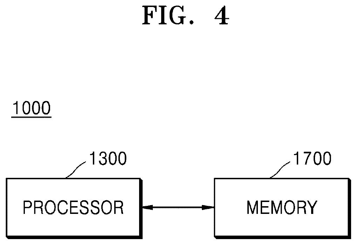

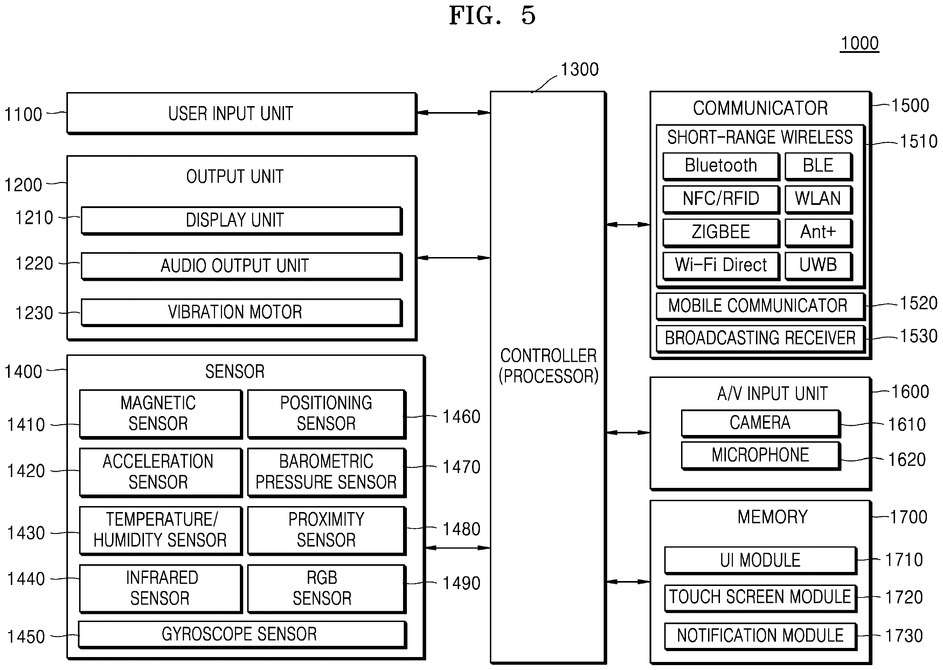

FIGS. 4 through 5 are block diagrams for describing an internal structure of an electronic device, according to an embodiment.

Referring to FIG. 4, the electronic device 1000 may include a processor 1300 and a memory 1700. The processor 1300 according to an embodiment may include at least one processor 1300. However, all of the elements shown in FIG. 4 are not essential elements of the electronic device 1000. More elements or less elements than those shown in FIG. 4 may be used to implement the electronic device 1000.

For example, as shown in FIG. 3, the electronic device 1000 according to an embodiment may further include a user input unit 1100, an output unit 1200, a sensor 1400, a communicator 1500, an A/V input unit 1600, and a display 1210 in addition to the processor 1300 and the memory 1700.

The user input unit 1100 is a means through which a user inputs data for controlling the electronic device 1000. For example, the user input unit 1100 may include, but not limited to, a keypad, a dome switch, a touch pad (a capacitive overlay type, a resistive overlay type, an infrared beam type, a surface acoustic wave type, an integral strain gauge type, a piezoelectric effect type, etc.), a jog wheel, a jog switch, etc.

According to an embodiment, the user input unit 1100 may receive a user input to perform barcode reading.

The output unit 1200 may output an audio signal, a video signal, or a vibration signal, and may include a display unit 1210, an audio output unit 1220, and a vibration motor 1230.

The display unit 1210 may display information processed by the electronic device 1000. According to an embodiment, the display unit 1210 may display a captured-barcode image to be read or output a barcode-reading result.

When the display unit 1210 and a touch pad are configured as a touch screen in a layer structure, the display unit 1210 may be used as an input device as well as an output device. The display unit 1210 may include at least one of a liquid crystal display (LCD), a thin film transistor (TFT) LCD, an organic light-emitting diode (OLED), a flexible display, a three-dimensional (3D) display, or an electrophoretic display. According to an implementation form of the electronic device 1000, the electronic device 1000 may include two or more display units 1210.

The audio output unit 1220 may output audio data received from the communicator 1500 or stored in the memory 1700. According to an embodiment, the audio output unit 1220 may output a barcode reading result.

The vibration motor 1230 may output a vibration signal. The vibration motor 1230 may output a vibration signal when a touch is input to a touch screen. According to an embodiment, the vibration motor 1230 may output a vibration signal as the barcode reading result.

The processor 1300 may generally control an overall operation of the electronic device 1000. For example, the processor 1300 may control in overall the user input unit 1100, the output unit 1200, the sensor 1400, the communicator 1500, and the A/V input unit 1600, by executing programs stored in the memory 1700. The electronic device 1000 may include at least one processor 1300.

The processor 1300 may be configured to process a command of a computer program by executing basic arithmetic, logic, and input/output operations. The command may be provided from the memory 1700 to the processor 1300 or may be received through the communicator 1500 and provided to the processor 1300. For example, the processor 1300 may be configured to execute a command according to a program code stored in a recording device such as a memory.

The processor 1300 determines the plurality of lines that cover a part of the barcode in the captured-barcode image, and determine a distortion level of the barcode in the region adjacent to each line. The processor 1300 determines at least one line to be used for reading the barcode based on the distortion level, and read the barcode based on the determined line.

The sensor 1400 may sense a state of the electronic device 1000 or a state near the electronic device 1000, and deliver sensed information to the processor 1300.

The sensor 1400 may include, but not limited to, at least one of a magnetic sensor 1410, an acceleration sensor 1420, a temperature/humidity sensor 1430, an infrared sensor 1440, a gyroscope sensor 1450, a positioning sensor (e.g., a global positioning system (GPS)) 1460, a barometric pressure sensor 1470, a proximity sensor 1480, or a red/green/blue (RGB) sensor (or an illuminance sensor) 1490.

The communicator 1500 may include one or more components that enable communication with a server 2000 or an external device (not shown). For example, the communicator 1500 may include a short-range wireless communicator 1510, a mobile communicator 1520, and a broadcasting receiver 1530.

The short-range wireless communicator 1510 may include, but not limited to, a Bluetooth Low Energy (BLE) communication unit, a near field communication (NFC) unit, a wireless local area network (WLAN) (WiFi) communication unit, a ZigBee communication unit, an infrared Data Association (IrDA) communication unit, a WiFi Direct (WFD) communication unit, an ultra-wideband (UWB) communication unit, an Ant+ communication unit, etc.

The mobile communicator 1520 may transmit and receive a radio signal to and from at least one of a base station, an external terminal, or a server over a mobile communication network. Herein, the radio signal may include various forms of data corresponding to transmission/reception of a voice call signal, a video communication call signal, or a text/multimedia message.

The broadcasting receiver 1530 may receive a broadcasting signal and/or broadcasting-related information from an external source through a broadcasting channel. The broadcasting channel may include a satellite channel and a terrestrial channel. According to implementation examples, the electronic device 1000 may not include the broadcasting receiver 1530.

According to an embodiment, the communicator 1500 may transmit and receive a captured-barcode image to and from the external device. In addition, the communicator 1500 may transmit and receive a barcode reading result to and from the external device.

The A/V input unit 1600 may input an audio signal or a video signal, and may include a camera 1610, a microphone 1620, and so forth. The camera 1610 may obtain an image frame such as a still image or a moving image in a video communication mode or a photographing mode through an image sensor. The image captured by the image sensor may be processed by the processor 1300 or a separate image processor (not shown). According to an embodiment, the camera 1610 may generate an image by capturing an image of the barcode.

The microphone 1620 may receive an external audio signal and process the received audio signal into electric voice data. For example, the microphone 1620 may receive a user's voice including a command for reading the barcode.

The memory 1700 may store programs for processing and control of the processor 1300 and store data input to or output from the electronic device 1000.

According to an embodiment, the memory 1700 may store a captured-barcode image.

The memory 1700 may include a storage medium of at least one type of a flash memory type, a hard disk type, a multimedia card micro type, a card type memory (e.g., a secure digital (SD) or extreme digital (XD) memory, etc.), a random-access memory (RAM), a static random-access memory (SRAM), a read-only memory (ROM), an electrically erasable programmable read-only memory (EEPROM), a programmable read-only memory (PROM), a magnetic memory, a magnetic disk, an optical disk, or the like.

The programs stored in the memory 1700 may be classified into a plurality of modules depending on a function thereof, e.g., a user interface (UI) module 1710, a touch screen module 1720, a notification module 1730, and so forth.

The UI module 1710 may provide a specialized UI or graphic UI (GUI) interworking with the electronic device 1000 for each application. The touch screen module 1720 may sense a touch gesture of a user on a touch screen and deliver information about the touch gesture to the processor 1300. The touch screen module 1720 according to an embodiment may recognize and analyze a touch code. The touch screen module 1720 may be configured with separate hardware including a controller.

To sense a touch or proximity touch on the touch screen, various sensors may be provided inside or near the touch screen. An example of the sensor for sensing a touch on the touch screen may be a tactile sensor. The tactile sensor refers to a sensor that senses a touch by a particular object to the extent or larger to which a person feels the touch. The tactile sensor may sense a lot of information such as the roughness of a contact surface, the hardness of a contact object, the temperature of a contact point, etc.

The user's touch gesture may include a tap, a touch & hold, a double tap, a drag, panning, a flick, a drag & drop, a swipe, and so forth.

The notification module 1730 may generate a signal for notifying of occurrence of an event of the electronic device 1000.

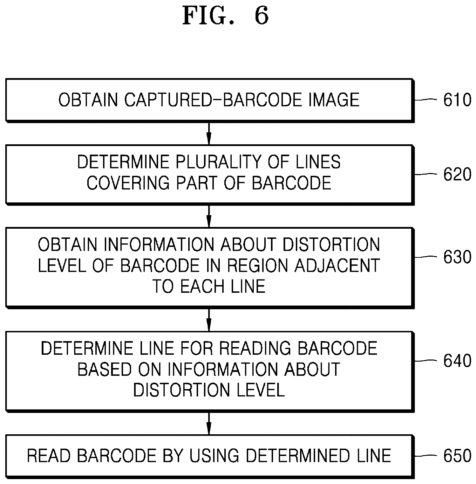

FIG. 6 is a flowchart illustrating a method of reading a barcode, according to an embodiment.

Referring to FIG. 6, in operation 610, the electronic device 1000 obtains a captured-barcode image. For example, the electronic device 1000 may obtain the captured-barcode image by capturing an image of the barcode using the camera 1610 included in the electronic device 1000. In another example, the electronic device 1000 may receive the captured-barcode image from the external device or obtain the captured-barcode image from data stored in the memory 1700.

In operation 610, a plurality of captured-barcode images obtained by capturing images of the same barcode is obtained. For example, the electronic device 1000 may obtain the plurality of captured-barcode images by capturing images of the same barcode at specific time intervals.

In operation 620, the electronic device 1000 determines a plurality of lines for the barcode in the image. For example, the electronic device 1000 may identify a region where the barcode is provided, by analyzing the image, and determine a plurality of lines passing through the barcode at specific intervals in an image region where the barcode is provided. Without being limited to the foregoing example, the plurality of lines may be determined to cover a part of the barcode in various directions.

In operation 630, the electronic device 1000 obtains information about a distortion level of the barcode for each line determined in operation 620. The electronic device 1000 may obtain the information about the distortion level of the barcode by analyzing the image in a region adjacent to each line.

The information about the distortion level may be determined based on at least one distortion parameter. Each distortion parameter may include a value indicating a level at which the image is distorted by at least one of blurring, lighting, an image resolution, or a curved surface.

In operation 640, the electronic device 1000 determines at least one line for determining the barcode based on the information about the distortion level obtained in operation 630. For example, the electronic device 1000 may determine at least one line in a descending order of the distortion level of the barcode. For example, the electronic device 1000 may determine at least one line in order from the lowest to the highest distortion level of the barcode.

In operation 650, the electronic device 1000 reads the barcode by using at least one line for reading the barcode. For example, the electronic device 1000 may read the barcode by analyzing an image region adjacent to a line. In an embodiment, an image region adjacent to each line used for reading the barcode may be a region that is the same as the image region adjacent to each line used for obtaining the distortion level in operation 630.

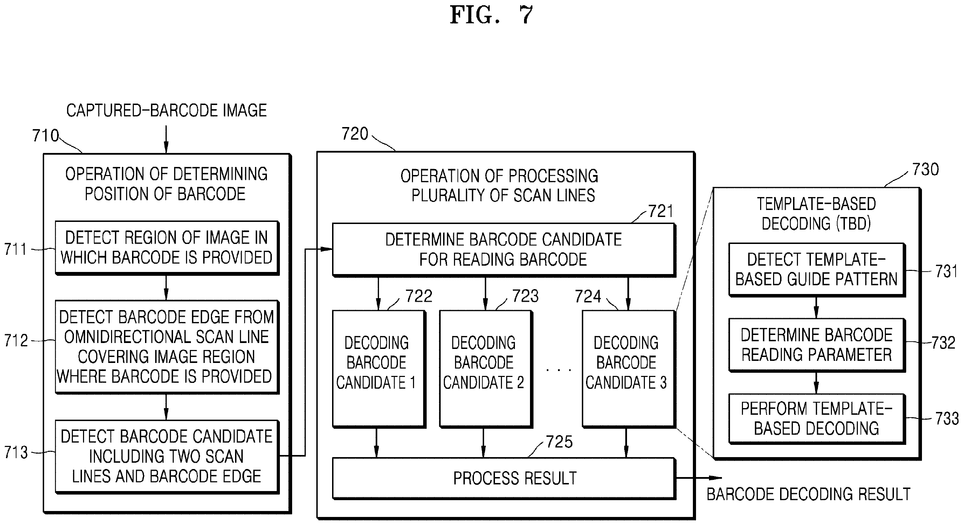

FIG. 7 is a flowchart illustrating a method of reading a barcode from an image, according to an embodiment. According to the method illustrated in FIG. 7, a barcode may be read from an image by using a template-based decoding method.

Referring to FIG. 7, the method of reading the barcode from the image according to an embodiment may include operation 710 of determining a position of the barcode and operation 720 of processing a plurality of scan lines.

In operation 710 of determining the position of the barcode, the electronic device 1000 may identify an image region where the barcode is provided from a captured-barcode image, and detect a barcode candidate for reading the barcode from the identified image region.

In operation 711 of operation 710 of determining the position of the barcode, the electronic device 1000 may detect the image region for reading the barcode upon input of the captured-barcode image.

The electronic device 1000 may perform preprocessing for reading the barcode on the captured-barcode image. For example, the electronic device 1000 may crop the image region in which the barcode is provided, and down-scale the image at a minimum resolution allowing barcode reading. By performing preprocessing on the captured-barcode image, the amount of computation in barcode reading may be minimized. Without being limited to the foregoing example, preprocessing may further include an operation to optimize a process of reading the barcode according to an embodiment.

According to an embodiment, barcode reading may be performed on a plurality of captured-barcode images obtained by capturing images of the same barcode. For example, the electronic device 1000 may perform the foregoing preprocessing for reading the barcode from a plurality of captured-barcode images obtained by capturing images of the same barcode at specific time intervals.

In operation 712, the electronic device 1000 may detect a barcode edge from an omnidirectional (e.g., 30 degrees, 45 degrees, 90 degrees, etc.) scan line that covers the image region where the barcode is provided. The barcode edge may mean a part of the barcode. For example, the electronic device 1000 may draw scan lines in various directions and positions for the image region where the barcode is provided, and detect a part of the barcode, which exists adjacent to each scan line, as the barcode edge. For example, a part of the barcode existing between two scan lines may be detected as a barcode edge.

In operation 713, the electronic device 1000 may detect a barcode candidate including two scan lines and a barcode edge. The two scan lines included in one barcode candidate may be adjacent scan lines. The electronic device 1000 may perform barcode reading by using at least one barcode candidate including a scan line and a barcode edge.

In operation 720 of processing a plurality of scan lines, the electronic device 1000 may perform a process for reading the barcode by using the barcode candidate.

In an example shown in FIG. 7, for each scan line, template-based decoding 730 using the barcode edge may be performed. However, without being limited to the example shown in FIG. 7, a process for reading the barcode using various barcode reading methods may be performed.

In operation 721 of operation 720 of processing a plurality of scan lines, the electronic device 1000 may determine the barcode candidate on which barcode reading is to be performed from among barcode candidates obtained in operation 710. For example, the electronic device 1000 may exclude a barcode candidate in which a barcode edge does not include a guide pattern of a barcode among the barcode candidates, from the barcode candidate on which barcode reading is to be performed. The guide pattern of the barcode may be a symbol indicating the front or end of the barcode. Without being limited to the foregoing example, in operation 721, the electronic device 1000 may exclude a barcode candidate that is not appropriate for performing barcode reading from among the barcode candidates.

In addition, the electronic device 1000 may determine the barcode candidate for reading the barcode based on a distortion level of the barcode, according to an embodiment. For example, the electronic device 1000 may determine a plurality of lines according to an embodiment identically to a scan line included in the barcode candidate. The electronic device 1000 may determine a distortion level of the barcode existing in a barcode edge between two scan lines, and determine the barcode candidate for reading the barcode based on the distortion level.

In operations 722 through 724, the electronic device 1000 may perform barcode reading with respect to at least one barcode candidates 1 through N determined in operation 721. According to an embodiment, like an example shown in FIG. 7, template-based decoding 730 may be performed for each line.

In template-based decoding 730, the electronic device 1000 may detect a template-based guide pattern from the barcode edge in operation 731 and identify a direction and a position of the barcode provided in the image. The electronic device 1000 may identify positions of a bar, a space, and a number that form the barcode, based on the template-based guide pattern detected in operation 731.

In operation 732, the electronic device 1000 may determine a parameter for reading the barcode. The parameter for reading the barcode may include information indicating characteristics of the barcode. The electronic device 1000 may perform template-based decoding based on the parameter for reading the barcode, in operation 733.

In operation 725, the electronic device 1000 may output a result of reading the barcode from a result of template-based decoding performed on the barcode candidates 1 through N.

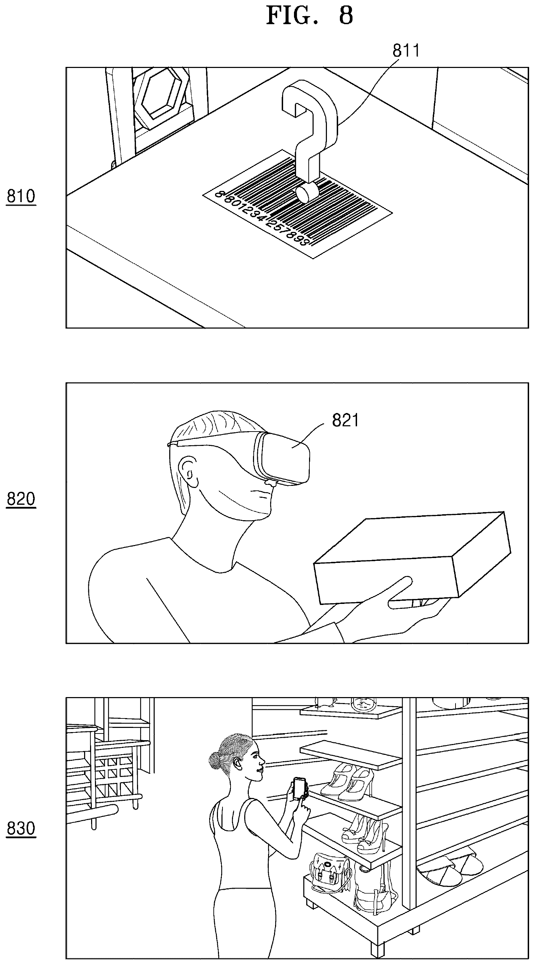

FIG. 8 illustrates an example of utilizing a method of reading a barcode, according to an embodiment.

Referring to 810 of FIG. 8, using the method of reading a barcode according to an embodiment, a virtual object 811 may be overlappingly displayed on a barcode image displayed on the electronic device 1000 based on information about the read barcode. For example, the electronic device 1000 may obtain data for displaying the virtual object 811 by using the read information. According to the example illustrated in FIG. 810, a user may easily recognize the virtual object 811 related to the barcode merely by capturing an image of the barcode using the camera of the electronic device 1000.

Referring to 820 of FIG. 8, using the method of reading a barcode according to an embodiment, the barcode may be read from an image captured using a camera included in wearable glasses 821, and the user may easily recognize the result of reading the barcode through a display of the wearable glasses 821. Thus, according to an embodiment, the user may read the barcode from a captured-barcode image, without a separate device for reading the barcode.

Referring to 830 of FIG. 8, the user, before a product placed on a store, may easily obtain information related to the product by reading a barcode attached to a product using the camera of the electronic device 1000. By easily reading the barcode from the captured-barcode image using the electronic device 1000, the user may easily obtain information about a product to be purchased.

According to an embodiment, the performance of reading the barcode from the image may be improved by reading the barcode based on various types of distortion.

An embodiment may be implemented using a recording medium including a computer-executable command such as a computer-executable programming module. A computer-readable recording medium may be an available medium that is accessible by a computer, and includes all of a volatile medium, a non-volatile medium, a separated medium, and a non-separated medium. The computer-readable recording medium may also include both a computer storage medium and a communication medium. The computer storage medium includes all of a volatile medium, a non-volatile medium, a separated medium, and a non-separated medium, which is implemented by a method or technique for storing information such as a computer-readable instruction, a data structure, a programming module, or other data. A communication medium may typically include a computer-readable instruction, a data structure, or a programming module, and an information delivery medium.

In the specification, the term "unit" may be a hardware component like a processor or a circuit, and/or a software component executed by a hardware component like a processor.

Those of ordinary skill in the art to which the present disclosure pertains will appreciate that the present disclosure may be implemented in different detailed ways without departing from the essential characteristics of the present disclosure. Accordingly, the aforementioned embodiments of the present disclosure should be construed as being only illustrative, but should not be constructed as being restrictive from all aspects. For example, each element described as a single type may be implemented in a distributed manner, and likewise, elements described as being distributed may be implemented as a coupled type.

The scope of the present disclosure is defined by the following claims rather than the detailed description.

## Claims

1. A method, performed by an electronic device, of reading a barcode, the method comprising:
obtaining (610) an image by capturing an image of the barcode;
determining (620) a plurality of lines that cover a part of the barcode from the image;
**characterized by**,
obtaining (630) information about a distortion level of the barcode in a region adjacent to each of the plurality of lines;
determining (640) at least one line for reading the barcode from among the plurality of lines, based on the obtained information; and
reading (650) the barcode based on the determined at least one line.

2. The method of claim 1, wherein the information about the distortion level comprises information about a distortion level of the barcode in a region adjacent to each of the plurality of lines, based on at least one of distortion caused by lighting, distortion caused by blurring, distortion caused by image resolution, distortion caused by noise, or distortion caused by a curved surface.

3. The method of claim 1, wherein the determining of the at least one line for reading the barcode comprises determining the at least one line for reading the barcode, based on a descending order of the distortion level among the plurality of lines.

4. The method of claim 1, wherein the obtaining of the image comprises obtaining a plurality of images by capturing images of the barcode,
and a plurality of lines that cover a part of the barcode are determined from among the plurality of images and at least one line for reading the barcode is determined from among the determined plurality of lines.

5. The method of claim 1, wherein the reading of the barcode comprises:
determining at least one weight value respectively corresponding to the at least one line determined for reading the barcode, based on the obtained information;
determining at least one parameter indicating characteristics of the barcode, based on the at least one line determined to read the barcode; and
reading the barcode based on the distortion level for each line determined for reading the barcode by using a result of applying the at least one weight value to the at least one parameter.

6. The method of claim 5, wherein the weight value is determined to be inversely proportional to the distortion level of the barcode in a region adjacent to a line corresponding to the weight value among the plurality of lines.

7. An electronic device (1000) for reading a barcode, the electronic device comprising:
at least one memory (1700) storing one or more instructions; and
at least one processor (1300) configured to execute the one or more instructions stored in the memory (1700), wherein the at least one processor (1300) is further configured to, by executing the one or more instructions:
obtain an image by capturing an image of the barcode;
determine a plurality of lines (210, ..., 240) that cover a part (200) of the barcode from the image;
**characterized in that** the at least one processor (1300) is configured to:
obtain information about a distortion level of the barcode in a region (211, 221, 231) adjacent to each of the plurality of lines (210, ..., 240);
determine at least one line for reading the barcode from among the plurality of lines (210, ..., 240), based on the obtained information; and
reading the barcode based on the determined at least one line.

8. The electronic device of claim 7, wherein the information about the distortion level comprises information about a distortion level of the barcode in a region adjacent to each of the plurality of lines (210, ..., 240), based on at least one of distortion caused by lighting, distortion caused by blurring, distortion caused by image resolution, distortion caused by noise, or distortion caused by a curved surface.

9. The electronic device of claim 7, wherein the at least one processor (1300) is further configured to determine the at least one line for reading the barcode, based on a descending order of the distortion level among the plurality of lines (210, ..., 240).

10. The electronic device of claim 7, wherein the at least one processor (1300) is further configured to obtain a plurality of images by capturing images of the barcode,
and a plurality of lines (210, ..., 240) that cover a part (200) of the barcode are determined from among the plurality of images and at least one line for reading the barcode is determined from among the determined plurality of lines (210, ..., 240).

11. The electronic device of claim 7, wherein the at least one processor (1300) is further configured to:
determine at least one weight value respectively corresponding to the at least one line determined for reading the barcode, based on the obtained information;
determine at least one parameter indicating characteristics of the barcode, based on the at least one line determined to read the barcode; and
read the barcode based on the distortion level for each line determined for reading the barcode by using a result of applying the at least one weight value to the at least one parameter.

12. The electronic device of claim 11, wherein the weight value is determined to be inversely proportional to the distortion level of the barcode in a region adjacent to a line corresponding to the weight value among the plurality of lines.

13. A computer-readable recording medium having recorded thereon a program configured to, when executed by a processor, control an electronic device to perform the method of reading a barcode of any one of claims 1 through 6.

## Patentansprüche

1. Von einer elektronischen Vorrichtung durchgeführtes Verfahren zum Lesen eines Strichcodes, wobei das Verfahren umfasst:
Erhalten (610) eines Bildes durch Erfassen eines Bildes des Strichcodes;
Bestimmen (620) einer Vielzahl von Zeilen, die einen Teil des Strichcodes aus dem Bild abdecken;
**gekennzeichnet durch**,
Erhalten (630) von Informationen über einen Verzerrungsgrad des Strichcodes in einem an jede der Vielzahl von Zeilen angrenzenden Bereich;
Bestimmen (640) mindestens einer Zeile zum Lesen des Strichcodes aus der Vielzahl von Zeilen, basierend auf den erhaltenen Informationen; und
Lesen (650) des Strichcodes auf der Grundlage der bestimmten mindestens einen Zeile.

2. Verfahren nach Anspruch 1, wobei die Informationen über den Verzerrungsgrad Informationen über einen Verzerrungsgrad des Strichcodes in einem an jede der Vielzahl von Zeilen angrenzenden Bereich umfassen, der auf mindestens einem von Folgendem beruht: durch Beleuchtung verursachte Verzerrung, durch Unschärfe verursachte Verzerrung, durch Bildauflösung verursachte Verzerrung, durch Rauschen verursachte Verzerrung oder durch eine gekrümmte Oberfläche verursachte Verzerrung.

3. Verfahren nach Anspruch 1, wobei das Bestimmen der mindestens einen Zeile zum Lesen des Strichcodes das Bestimmen der mindestens einen Zeile zum Lesen des Strichcodes auf der Grundlage einer absteigenden Reihenfolge des Verzerrungsgrads unter der Vielzahl von Zeilen umfasst.

4. Verfahren nach Anspruch 1, wobei das Erhalten des Bildes das Erhalten einer Vielzahl von Bildern durch Aufnahme von Bildern des Strichcodes umfasst,
und wobei eine Vielzahl von Zeilen, die einen Teil des Strichcodes abdecken, aus der Vielzahl von Bildern bestimmt wird und mindestens eine Zeile zum Lesen des Strichcodes aus der bestimmten Vielzahl von Zeilen bestimmt wird.

5. Verfahren nach Anspruch 1, wobei das Lesen des Strichcodes umfasst:
Bestimmen mindestens eines Gewichtswerts, der jeweils der mindestens einen zum Lesen des Strichcodes bestimmten Zeile entspricht, auf der Grundlage der erhaltenen Informationen;
Bestimmen mindestens eines Parameters, der Eigenschaften des Strichcodes angibt, basierend auf der mindestens einen Zeile, die zum Lesen des Strichcodes bestimmt wurde; und
Lesen des Strichcodes auf der Grundlage des Verzerrungsgrads für jede Zeile, der zum Lesen des Strichcodes bestimmt wird, unter Verwendung eines Ergebnisses der Anwendung des mindestens einen Gewichtswerts auf den mindestens einen Parameter .

6. Verfahren nach Anspruch 5, wobei der Gewichtswert so bestimmt wird, dass er umgekehrt proportional zum Verzerrungsgrad des Strichcodes in einem Bereich ist, der an eine dem Gewichtswert entsprechende Zeile aus der Vielzahl der Zeilen angrenzt.

7. Elektronische Vorrichtung (1000) zum Lesen eines Strichcodes, wobei die elektronische Vorrichtung umfasst:
mindestens einen Speicher (1700), der eine oder mehrere Instruktionen speichert; und
mindestens einen Prozessor (1300), der konfiguriert ist, um die eine oder mehreren Instruktionen, die in dem Speicher (1700) gespeichert sind, auszuführen, wobei der mindestens eine Prozessor (1300) ferner konfiguriert ist, um durch Ausführen der einen oder mehreren Instruktionen
ein Bild zu erhalten, indem ein Bild des Strichcodes aufgenommen wird;
eine Vielzahl von Zeilen (210, ..., 240), die einen Teil (200) des Strichcodes abdecken, aus dem Bild zu bestimmen;
**dadurch gekennzeichnet, dass** der mindestens eine Prozessor (1300) konfiguriert ist, um:
Informationen über einen Verzerrungsgrad des Strichcodes in einem Bereich (211, 221, 231) zu erhalten, der an jede der Vielzahl von Zeilen (210, ..., 240) angrenzt;
mindestens eine Zeile zum Lesen des Strichcodes aus der Vielzahl von Zeilen (210, ..., 240), basierend auf den erhaltenen Informationen zu bestimmen; und
den Strichcode auf der Grundlage der ermittelten mindestens einen Zeile zu lesen.

8. Elektronische Vorrichtung nach Anspruch 7, wobei die Informationen über den Verzerrungsgrad Informationen über einen Verzerrungsgrad des Strichcodes in einem an jede der Vielzahl von Zeilen (210, ..., 240) angrenzenden Bereich umfassen, der auf mindestens einem von Folgendem beruht: durch Beleuchtung verursachte Verzerrung, durch Unschärfe verursachte Verzerrung, durch Bildauflösung verursachte Verzerrung, durch Rauschen verursachte Verzerrung oder durch eine gekrümmte Oberfläche verursachte Verzerrung.

9. Elektronische Vorrichtung nach Anspruch 7, wobei der mindestens eine Prozessor (1300) ferner konfiguriert ist, um die mindestens eine Zeile zum Lesen des Strichcodes auf der Grundlage einer absteigenden Reihenfolge des Verzerrungsgrads unter der Vielzahl von Zeilen (210, ..., 240) zu bestimmen.

10. Elektronische Vorrichtung nach Anspruch 7, wobei der mindestens eine Prozessor (1300) ferner konfiguriert ist, um eine Vielzahl von Bildern durch Erfassen von Bildern des Strichcodes zu erhalten,
und aus der Vielzahl von Bildern eine Vielzahl von Zeilen (210, ..., 240) bestimmt wird, die einen Teil (200) des Strichcodes abdeckt, und aus der bestimmten Vielzahl von Zeilen (210, ..., 240) mindestens eine Zeile zum Lesen des Strichcodes bestimmt wird.

11. Elektronische Vorrichtung nach Anspruch 7, wobei der mindestens eine Prozessor (1300) ferner konfiguriert ist, um:
auf der Grundlage der erhaltenen Informationen mindestens einen Gewichtswert zu bestimmen, der jeweils der mindestens einen Zeile entspricht, die zum Lesen des Strichcodes bestimmt wurde;
mindestens einen Parameter, der die Eigenschaften des Strichcodes angibt, basierend auf der mindestens einen Zeile, die zum Lesen des Strichcodes bestimmt wurde, zu bestimmen; und
den Strichcode auf der Grundlage des Verzerrungsgrads für jede Zeile, der zum Lesen des Strichcodes bestimmt wird, unter Verwendung eines Ergebnisses der Anwendung des mindestens einen Gewichtswerts auf den mindestens einen Parameter zu lesen.

12. Elektronische Vorrichtung nach Anspruch 11, wobei der Gewichtswert so bestimmt wird, dass er umgekehrt proportional zum Verzerrungsgrad des Strichcodes in einem Bereich ist, der an eine dem Gewichtswert entsprechende Zeile aus der Vielzahl der Zeilen angrenzt.

13. Computerlesbares Aufzeichnungsmedium, auf dem ein Programm aufgezeichnet ist, das so konfiguriert ist, dass es, wenn es von einem Prozessor ausgeführt wird, eine elektronische Vorrichtung steuert, um das Verfahren zum Lesen eines Strichcodes nach einem der Ansprüche 1 bis 6 durchzuführen.

## Revendications

1. Procédé, exécuté par un dispositif électronique, de lecture d'un code-barres, le procédé comprenant :
obtenir (610) une image en capturant une image du code-barres ;
déterminer (620) une pluralité de lignes qui couvrent une partie du code-barres à partir de l'image ;
**caractérisé par**,
obtenir (630) des informations sur un niveau de distorsion du code-barres dans une région adjacente à chacune de la pluralité de lignes ;
déterminer (640) au moins une ligne de lecture du code-barres parmi la pluralité de lignes, sur la base des informations obtenues ; et
lire (650) le code-barres sur la base d'au moins une ligne déterminée.

2. Procédé de la revendication 1, dans lequel les informations sur le niveau de distorsion comprennent des informations sur un niveau de distorsion du code-barres dans une région adjacente à chacune de la pluralité de lignes, sur la base d'au moins l'un de ce qui suit : une distorsion causée par l'éclairage, une distorsion causée par le flou, une distorsion causée par la résolution de l'image, une distorsion causée par le bruit, ou une distorsion causée par une surface courbée.

3. Procédé de la revendication 1, dans lequel la détermination de l'au moins une ligne pour la lecture du code-barres comprend la détermination de l'au moins une ligne pour la lecture du code-barres sur la base d'un ordre décroissant du niveau de distorsion parmi la pluralité de lignes.

4. Procédé de la revendication 1, dans lequel l'obtention de l'image comprend l'obtention d'une pluralité d'images par la capture d'images du code-barres,
et une pluralité de lignes qui couvrent une partie du code-barres est déterminée parmi la pluralité d'images et au moins une ligne pour la lecture du code-barres est déterminée parmi la pluralité de lignes déterminée.

5. Procédé de la revendication 1, dans lequel la lecture du code-barres comprend :
déterminer au moins une valeur de poids correspondant respectivement à l'au moins une ligne déterminée pour la lecture du code-barres, sur la base des informations obtenues ;
déterminer au moins un paramètre indiquant des caractéristiques du code-barres, sur la base d'au moins une ligne déterminée pour la lecture du code-barres ; et
lire le code-barres sur la base du niveau de distorsion pour chaque ligne déterminé pour la lecture du code-barres en utilisant un résultat de l'application de l'au moins une valeur de poids à l'au moins un paramètre.

6. Procédé de la revendication 5, dans lequel la valeur de poids est déterminée comme étant inversement proportionnelle au niveau de distorsion du code-barres dans une région adjacente à une ligne correspondant à la valeur de poids parmi la pluralité de lignes.

7. Dispositif électronique (1000) pour la lecture d'un code-barres, le dispositif électronique comprenant :
au moins une mémoire (1700) stockant une ou plusieurs instructions ; et
au moins un processeur (1300) configuré pour exécuter l'une ou plusieurs instructions stockées dans la mémoire (1700), dans lequel l'au moins un processeur (1300) est en outre configuré pour, en exécutant l'une ou plusieurs instructions :
obtenir une image en capturant une image du code-barres ;
déterminer une pluralité de lignes (210, ..., 240) qui couvrent une partie (200) du code-barres à partir de l'image ;
**caractérisé en ce que** l'au moins un processeur (1300) est configuré pour :
obtenir des informations sur le niveau de distorsion du code-barres dans une région (211, 221, 231) adjacente à chacune de la pluralité de lignes (210, ..., 240) ;
déterminer au moins une ligne pour la lecture du code-barres parmi la pluralité de lignes (210, ..., 240) sur la base des informations obtenues ; et
lire le code-barres sur la base de l'au moins une ligne déterminée.

8. Dispositif électronique de la revendication 7, dans lequel les informations sur le niveau de distorsion comprennent des informations sur un niveau de distorsion du code-barres dans une région adjacente à chacune de la pluralité de lignes (210, ..., 240), sur la base d'au moins l'un de ce qui suit : une distorsion causée par l'éclairage, une distorsion causée par le flou, une distorsion causée par la résolution de l'image, une distorsion causée par le bruit, ou une distorsion causée par une surface courbée.

9. Dispositif électronique selon la revendication 7, dans lequel l'au moins un processeur (1300) est en outre configuré pour déterminer l'au moins une ligne pour la lecture du code-barres, sur la base d'un ordre décroissant du niveau de distorsion parmi la pluralité de lignes (210, ..., 240).

10. Dispositif électronique de la revendication 7, dans lequel l'au moins un processeur (1300) est en outre configuré pour obtenir une pluralité d'images en capturant des images du code-barres,
et une pluralité de lignes (210, ..., 240) qui couvrent une partie (200) du code-barres est déterminée parmi la pluralité d'images et au moins une ligne pour la lecture du code-barres est déterminée parmi la pluralité déterminée de lignes (210, ..., 240).

11. Dispositif électronique de la revendication 7, dans lequel l'au moins un processeur (1300) est en outre configuré pour :
déterminer au moins une valeur de poids correspondant respectivement à l'au moins une ligne déterminée pour la lecture du code-barres, sur la base des informations obtenues ;
déterminer au moins un paramètre indiquant des caractéristiques du code-barres, sur la base d'au moins une ligne déterminée pour la lecture du code-barres ; et
lire le code-barres sur la base du niveau de distorsion pour chaque ligne déterminé pour la lecture du code-barres en utilisant un résultat de l'application de l'au moins une valeur de poids à l'au moins un paramètre.

12. Dispositif électronique de la revendication 11, dans lequel la valeur de poids est déterminée comme étant inversement proportionnelle au niveau de distorsion du code-barres dans une région adjacente à une ligne correspondant à la valeur de poids parmi la pluralité de lignes.

13. Support d'enregistrement lisible par ordinateur sur lequel est enregistré un programme configuré pour, lorsqu'il est exécuté par un processeur, commander un dispositif électronique afin d'exécuter le procédé de lecture d'un code-barres de l'une quelconque des revendications 1 à 6.
